# EUROPEAN PATENT SPECIFICATION

(11) **EP 3 178 609 B1**
(45) Date of publication and mention of the grant of the patent: **26.06.2019**
(21) Application number: 16191931.1
(22) Date of filing: 30.09.2016
(51) Int. Cl.: B25D 16/00, B25D 11/12, F16D 7/04, B25B 21/02, B25B 23/14, B25D 11/00, F16H 1/28

(54) **DRILL**
BOHRMASCHINE
PERCEUSE

(30) Priority: 10.12.2015 GB 201521741
(43) Date of publication of application: 14.06.2017
(73) Proprietor: Black & Decker Inc., New Britain, CT 06053 (US)
(72) Inventor: Rompel, Markus, 65594 Runkel / Schadeck (DE); Gottschling, Rafael, 65618 Selters-Eisenbach (DE); Hernandez Arenas, Santiago, 28359 Bremen (DE)
(74) Representative: SBD IPAdmin

(56) References cited:
- EP-A1- 0 212 381
- EP-A1- 2 700 478
- WO-A1-2012/093010
- US-A- 1 274 722
- US-B2- 7 494 437

## Description

The present invention relates to a drill and in particular, to a hammer drill.

A hammer drill comprises a tool holder in which a cutting tool, such as a drill bit, can be supported and driven by the hammer drill. The hammer drill can often drive the cutting tool in three different ways, each being referred to as a mode of operation. The cutting tool can be driven in a hammer only mode, a rotary only mode and a combined hammer and rotary mode. A hammer drill will typically comprise an electric motor and a transmission mechanism by which the rotary output of the electric motor can either rotationally drive the cutting tool to perform the rotary only mode or repetitively strike the end of a cutting tool to impart axial impacts onto the cutting tool to perform the hammer only mode or rotationally drive and repetitively strike the cutting tool to perform the combined hammer and rotary mode.

EP1674207 describes an example of such a hammer drill.

An impact driver comprises a tool holder in which a tool, such as a screw driver bit, can be supported and rotationally driven by the impact driver. The impact driver comprises a tangential impact mechanism which is activated when a large torque is experienced by the tool. The tangential impact mechanism imparts tangential (circumferential or rotational) impacts onto the tool until the torque applied to the tool drops below a predetermined value.

US2005/0173139 describes an example of such an impact driver.

It is known to provide hammer drills with an additional tangential impact mechanism so that the hammer drill can impart rotational impacts onto a cutting tool in addition to axial impacts. US7861797, WO2012/144500 and DE1602006 all disclose such hammer drills. However, in each of these hammer drills the additional tangential impact mechanism is rotationally driven at a same rate as the rate of rotation of the output spindle.

EP2700478 discloses a drill having all of the features in the pre-characterising portion of claim 1.

The object of the present invention is to provide a drill with an additional tangential impact mechanism which has an improved operational performance.

Accordingly, there is provided a drill in accordance with claim 1.

The present invention provides a drill which includes a tangential impact mechanism which is activated when a restive torque above an adjustable predetermined value is applied to the spindle of the drill. The present invention provides the ability to rotatingly drive the output spindle at a first speed during the normal course of drilling whilst allowing the tangential impact mechanism to be driven at a second different rotational speed when the tangential impact is caused to be activated. This allows both the drilling performance of the drill and impacting performance of tangential impact mechanism to be optimised as the predetermined value at which the tangential impact mechanism is activated can be adjusted to suite the particular application and they can both run at desired speeds which are different to each other.

An embodiment of the present invention will now be described with reference to accompanying drawings of which:
Figure 1 shows an example of a side view of a hammer drill with an additional tangential impact mechanism;
Figure 2 shows a vertical cross section of the rotary drive, the hammer mechanism and the tangential impact mechanism of the hammer drill shown in Figure 1;
Figure 3 shows a horizontal cross section of the rotary drive, the hammer mechanism and the tangential impact mechanism of the hammer drill in the direction of Arrows B in Figure 2;
Figure 4 shows a vertical cross section of the spindle and the tangential impact mechanism of the hammer drill in the direction of Arrows C in Figure 2;
Figure 5 shows a horizontal cross section of the rotary drive, the hammer mechanism and the tangential impact mechanism of the hammer drill in the direction of Arrows D in Figure 2;
Figure 6 shows a vertical cross section of the planetary gear mechanism of the hammer drill in the direction of Arrows E in Figure 2;
Figure 7 shows a sketch of the spindle, sleeve with the V shaped grooves, the anvil, the U shaped recesses and the interconnecting ball bearings;
Figure 8 shows a perspective view of a tangential impact mechanism of a hammer drill in accordance with an embodiment of the present invention;
Figure 9 shows the torque clutch of Figure 8;
Figure 10 shows a cut away view of the torque clutch of Figure 8;
Figure 11 shows a first exploded view of the tangential impact mechanism of Figure 8;
Figure 12 shows a second exploded view of the tangential impact mechanism of Figure 8;
Figure 13 shows a cross sectional view of the tangential impact mechanism of Figure 8;
Fig 14A shows a perspective of the torque selector ring from a first end;
Fig 14B shows a perspective of the torque selector ring from a second opposite end;
Fig 15A shows a perspective of the ring gear support from a first end;
Fig 15B shows a perspective of the ring gear support from a second opposite end;
Fig.16A shows a schematic diagram of part of the selector ring and ring gear support of Figures 14 and 15; and
Fig. 16B shows a schematic diagram of an alternate design of a selector ring with the ring gear support of Figure 15.

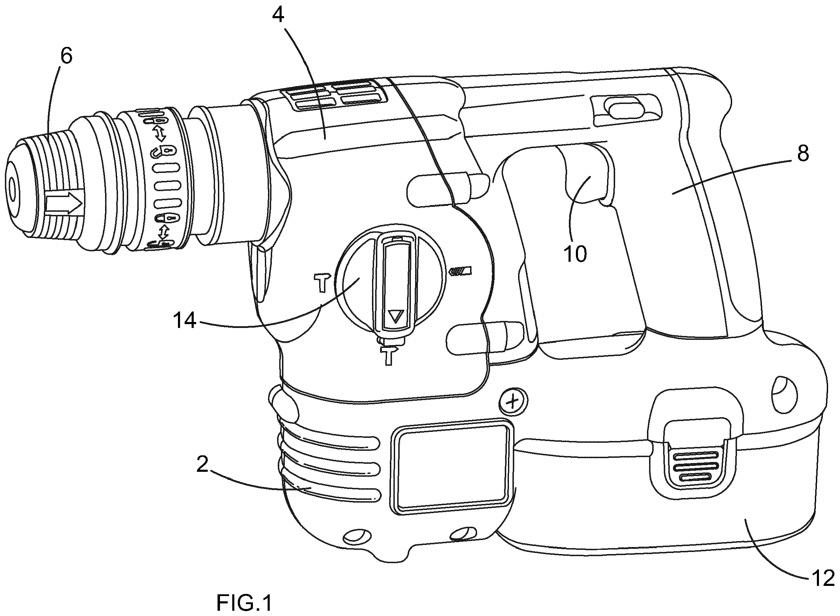

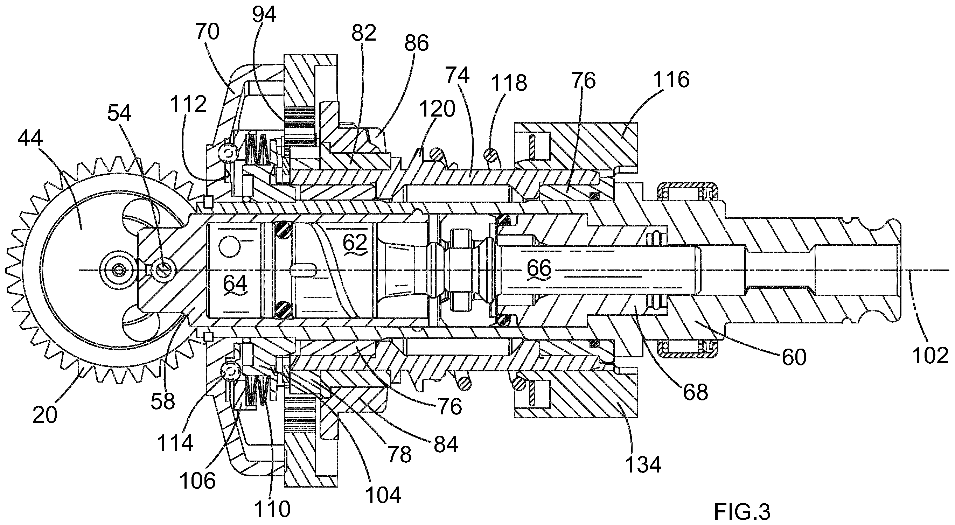

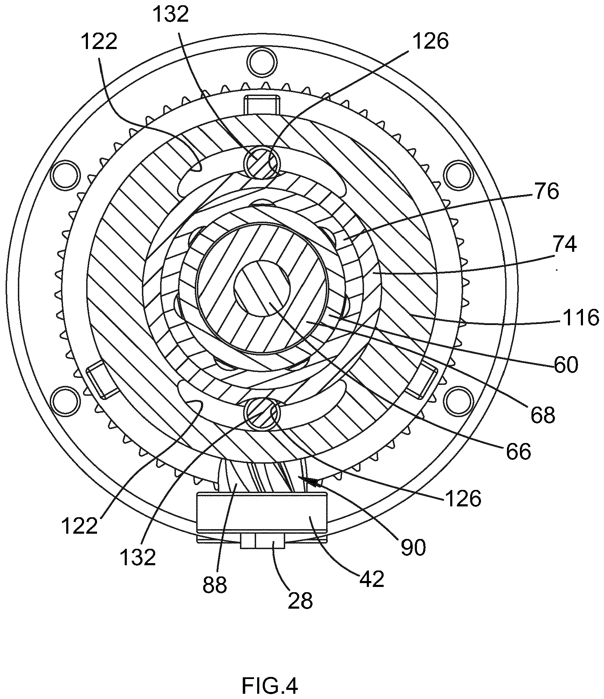

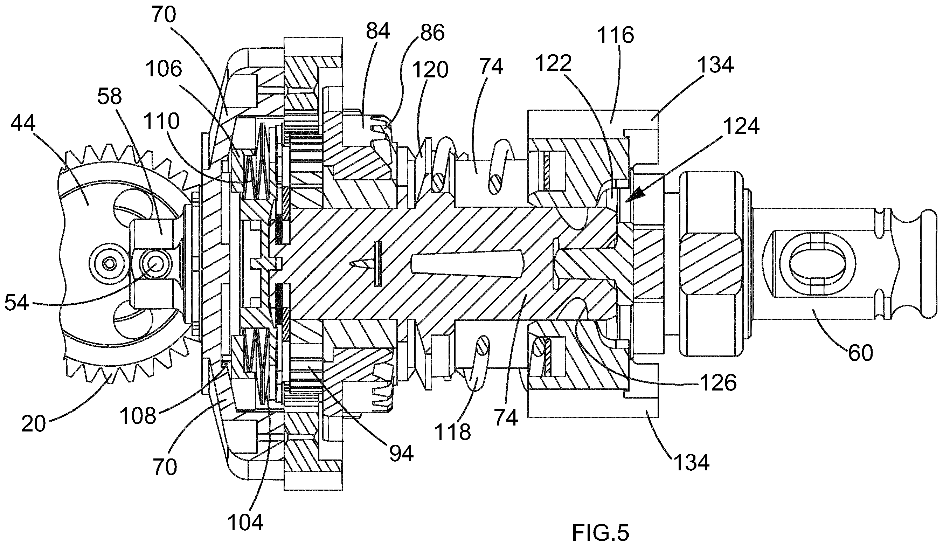

An example of a hammer drill with a tangential impact mechanism will now be described with reference to Figures 1 to 7.

Referring to Figure 1, the hammer drill comprises a motor housing 2 in which is located an electric motor 100 and a transmission housing 4 in which is located a hammer mechanism (which is described in more detail below) to impart axial impacts onto a cutting tool, a rotary drive (which is described in more detail below) to rotationally drive a cutting tool and a tangential (rotational) impact mechanism (which is described in more detail below) to impart tangential impacts to a cutting tool. A tool holder 6 is attached to the front of the transmission housing 4 which is capable of supporting a cutting tool to be driven by the hammer drill. A handle 8 is attached at one end to the motor housing 2 and at the other end to the transmission housing 4. A trigger button 10 is mounted within the handle 8 which is used by the operator to activate the electric motor 100. A battery pack 12 is attached to the base of the handle 8 which provides electrical power to the motor 100. A mode change knob 14 is mounted on the side of the transmission housing 2. The knob 14 can be rotated to three different positions to change the mode of operation of the hammer drill between hammer only mode, rotary only mode and combined rotary and hammer mode.

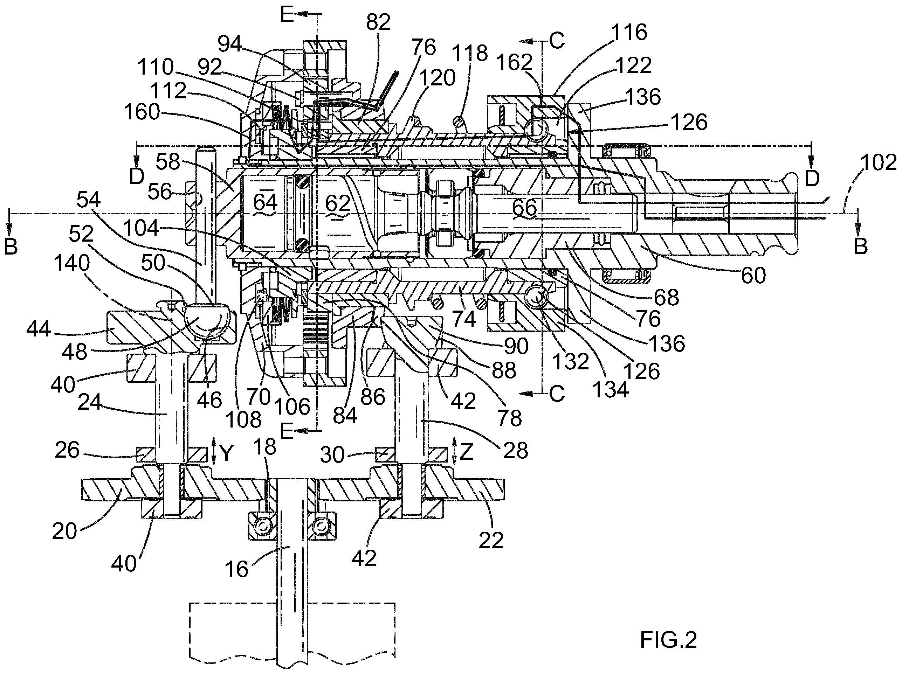

Referring to Figure 2, the motor 100 has a drive spindle 16 with teeth 18 which mesh with two gears 20, 22.

The first gear 20 is capable of being drivingly connected to a first shaft 24 (which is rotationally mounted within the transmission housing 2 by bearings 40) via a first sleeve 26. The first sleeve 26 can axially slide in the direction of Arrow Y along the first shaft 24 but is rotationally fixed to the first shaft 24. The first gear 20 can freely rotate on the first shaft 24. The side of the first sleeve 26 comprises teeth (not shown) which can engage with teeth (not shown) formed on the side of the first gear 20 when the first sleeve 26 is moved into engagement with the first gear 24 to drivingly connect the first sleeve 26 with the first gear 20. When the first sleeve 26 is drivingly engaged with the first gear 20, the rotational movement of the first gear 20 is transferred to the first shaft 24.

The second gear 22 is capable of being drivingly connected to a second shaft 28 (which is rotationally mounted within the transmission housing 2 by bearings 42) via a second sleeve 30. The second sleeve 30 can axially slide in the direction of Arrow Z along the second shaft 28 but is rotationally fixed to the second shaft 28. The second gear 22 can freely rotate on the second shaft 28. The side of the second sleeve 30 comprises teeth (not shown) which can engage with teeth (not shown) formed on the side of the second gear 22 when the second sleeve 30 is moved into engagement with the second gear 22 to drivingly connect the second sleeve 30 with the second gear 22. When the second sleeve 30 is drivingly engaged with the second gear 22, the rotational movement of the second gear 22 is transferred to the second shaft 28.

The movement of the two sleeves 26, 30 is controlled by a mode change mechanism, designs of which are well known in art. For example, the sleeves 26, 30 can be moved by a see-saw arrangement similar to that described in EP1674207. By moving the first sleeve 26 only into engagement with the first gear 20, the second sleeve 30 only into engagement with the second gear 22, or both sleeves 26, 30 into engagement with their respective gears 20, 22, the mode of operation of the hammer drill can be changed between hammer only mode, rotary only mode and combined rotary and hammer mode respectively. The mode change mechanism is controlled by rotation of the mode change knob 14. As the mode change mechanism does not form part any part of the present invention, it will not be described in any more detail.

Rigidly attached to the top of the first shaft 24 is a crank plate 44. A recess 46 is formed within the crank plate 44 in which is located a part spherical ball 48. The part spherical ball 48 can pivot over a range of angles within the recess 46. The part spherical ball 48 is prevented from exiting the recess 46 by a shoulder 50 engaging with a lip 52 formed on the crank plate 44. A drive shaft 54 is rigidly connected to and extends from the part spherical ball 48. The shaft 54 passes through and is capable of axially sliding within a tubular passage 56 formed in the rear of a hollow piston 58 which is mounted within the rear end of a hollow output spindle 60. Rotation of the crank plate 44 results in a reciprocating movement of the hollow piston 58 within the hollow output spindle 60.

A ram 62 is mounted within the hollow piston 58 which is reciprocatingly driven by the reciprocating piston 58 via an air spring 64. The ram 62 repetitively strikes a beat piece 66 mounted within a beat piece support structure 68 inside of the hollow spindle 60, which in turn repetitively strikes an end of a cutting tool held by the tool holder 6 inside the front end of the hollow spindle 60.

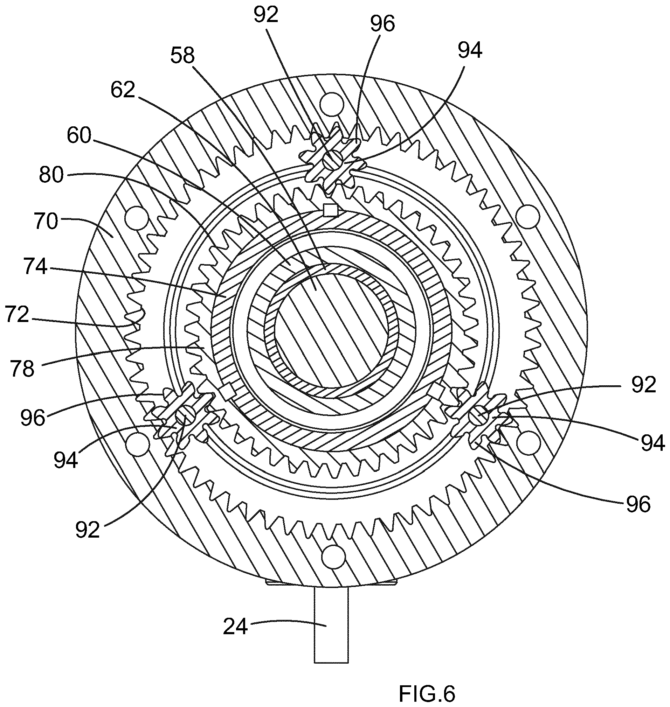

Mounted on the rear part of the hollow output spindle 60 in a rigid manner is a cup shaped gear 70 with teeth 72 formed on an inner wall facing inwardly towards the hollow spindle 60 as best seen in Figure 6. Rotation of the hollow spindle 60 about its longitudinal axis 102 results in rotation of the cup shaped gear 70 and vice versa.

Rotationally mounted on the hollow spindle 60 via bearings 76 is a sleeve 74. The sleeve 74 is axially fixed relative to the hollow spindle 60. The rear end of the sleeve 74 extends inside of the cup shaped gear 70. An annular shaped gear 78 is rigidly mounted on the rear end of the sleeve 74 inside of the cup shaped gear 70 which has teeth 80 which face away radially outwardly from the hollow spindle 60 towards the teeth 72 of the cup shaped gear 70. Rotation of the sleeve 74 results in rotation of the annular shaped gear 78 and vice versa.

Mounted on the sleeve 74 is a sliding bearing 82. Mounted on the sliding bearing 82 in a freely rotatable manner is a ring shaped first bevel gear 84. The first bevel gear 84 is capable of freely rotating around the sleeve 74 on the slide bearing 82 but is axially fixed relative to the sleeve 74. The first bevel gear 84 comprises teeth 86 which mesh with teeth 88 of a second bevel gear 90 rigidly attached to the second shaft 28. Rotation of the second shaft 22 results in rotation of the second bevel gear 90 which in turn rotates the first bevel gear 84 on the slide bearing 82 around the sleeve 74.

Attached to the side of the first bevel gear 84 in angular positions of 120 degrees relative to each other are three pins 92. The pins 92 extend rearwardly in parallel to the longitudinal axis 102 of the hollow spindle 60 and to each other into the inside of the cup shape gear 70. Mounted on each pin 92 in a freely rotatable manner is a circular gear 94 with teeth 96. The teeth 96 of all three circular gears 94 mesh with both the teeth 72 of the cup shaped gear 70 and the teeth 80 of the annular shaped gear 78. The three circular gears 94, the cup shaped gear 70, the annular shaped gear 78 and the first bevel gear 84 form a planetary gear system with the three circular gears 94 forming the planetary gears, the cup shaped gear 70 forming a ring gear, the annular shaped gear 78 forming the sun gear and the first bevel gear 84 forming the carrier for the planetary gears 94.

Rigidly attached to the rear of the sleeve 74 is a clutch sleeve 104. Mounted on the clutch sleeve 104 is a ring shaped ball bearing cage 106 which holds a number of ball bearings 108 in preset positions within the ball bearing cage 106 but in a freely rotatable manner. The ball bearing cage 106 can axially slide on the clutch sleeve 104 but is rotationally fixed to the clutch sleeve 104. Sandwiched between the clutch sleeve 104 and ball bearing cage 106 are four bevel washers 110 which act as a spring, urging the ball baring cage 106 rearwardly towards a side wall 112 of the cup shaped gear 70. Formed within the side wall 112 around the axis 102 of the hollow spindle 60 is a groove (not shown) which acts as a path for the ball bearings 108. Formed along the path are a number of indentions 114 corresponding to the number and relative positions of the ball bearings 108. The ball bearings 108 are held within the path and indentations by the ball bearing cage 106 which presses them against the wall 112 due to the biasing force of the bevel washers 110. The clutch sleeve 104, the bevel washers 110, the ball bearing cage 106, the ball bearings 108 and the path with the indentations 114 within the wall 112 of the cup shaped gear 70 form a torque clutch.

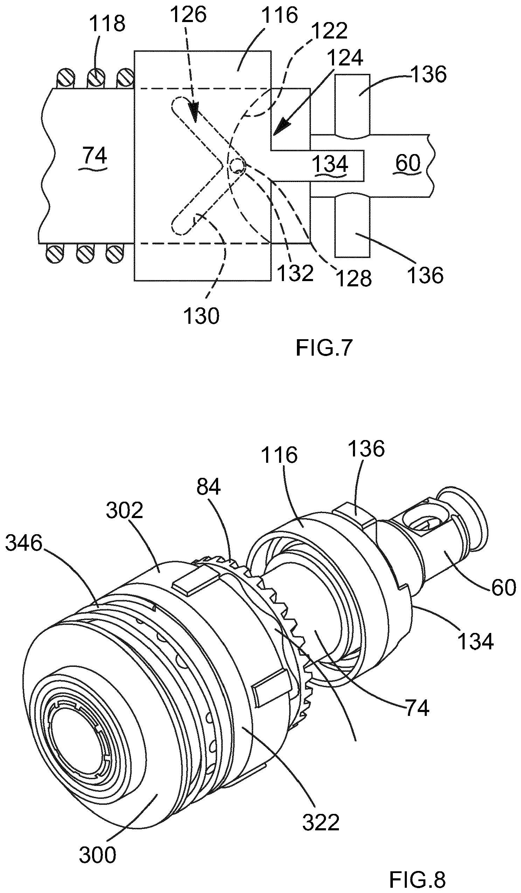

Mounted on the sleeve 74 is an anvil 116. The anvil 116 can axially slide along the sleeve 74 or rotate around the sleeve 74. Formed on the inside of the anvil 116, on opposite sides of the sleeve 74 in a symmetrical manner, are two U shaped recesses 122 (shown as dashed lines in Figure 7) of the same dimensions, the entrances 124 of which face forward. The height of the U shaped recess 122 is constant across the length and width of the U shaped recess 122. Formed on the outside of the sleeve 74, on opposite sides of the sleeve 74 in a symmetrical manner, are two V shaped grooves 126, the apexes 128 of which point forward. Each arm 130 of each of the V shaped grooves 126 extends both around the sleeve 74 and rearwardly (left in Figure 2) along the sleeve 74 in a spiral manner, the arms 130 of each V shaped groove 126 being symmetrical with the other arm 130 of the same V shaped groove 126. The anvil is mounted on the sleeve 74 so that each U shaped recess 122 locates above and faces towards a V shaped groove 126. A ball bearing 132 locates in each V shaped groove 126, the diameter of the two ball bearings 132 being equal. The diameter of the ball bearings 132 is greater than the depth of the V shaped grooves 126 and therefore the side of the ball bearings 132 project into the U shaped recesses 122. The diameter of the ball bearings 132 is slightly less than the depth of the V shaped grooves and height of the U shaped recesses 122 so that the ball bearings are held within the V shaped grooves 126 by an inner wall of the U shaped recesses 122.

A helical spring 118 is sandwiched between the anvil 116 and a shoulder 120 formed on the sleeve 74 to urge the anvil 118 in a forward (right in Figure 2) direction. When the anvil 116 is urged forward, the ball bearings 132 engage with the rear walls of the U shaped recesses 122 and are then urged forward. As the ball bearing 132 are moved forward, they move along an arm 130 of a V shaped groove 126 until they reach the apex 128. The apex 130 of the V shaped grooves prevents any further forward movement of the ball bearings 132. The ball bearings 132 in turn prevent any further forward movement of the anvil 116. The ball bearings 132, V shaped grooves 126 and U shaped recesses 122 together with the spring 118 form a cam system by which the relative axial position of the anvil 116 on the sleeve 74 is controlled as the anvil 116 rotates relative to the sleeve 74.

Formed on the front of the anvil 116, on opposite sides of the anvil 116, in a symmetrical manner are two protrusions 134 which extend in a forward direction (right in Figure 2) parallel to the longitudinal axis 102 of the spindle 60. Formed on opposite sides of the spindle 60 in a symmetrical manner are two impact arms 136 which extend perpendicularly to the longitudinal axis 102 of the spindle 60 away from the spindle 60 in opposite directions. When the ball bearings 132 are located at the apex of the V shaped grooves 126, resulting in the anvil 116 being in its most forward position, the two protrusions 134 extend in a forward direction past the two impact arms 136. The length of the impact arms 136 is such that if the spindle 60 rotates relative to the sleeve 74 (with the anvil 116 which is mounted on and connected to the sleeve 74 via the cam system) and the anvil 116 is in its most forward position, the side surfaces of the impact arms 136 would engage with the side surfaces of the protrusions 134 and prevent any further rotation of the anvil 116.

The spring 118, anvil 116, sleeve 74, V shaped grooves 126, the ball bearings 132, the U shaped recesses 122, and protrusions 134 form a tangential impact mechanism which imparts tangential strikes onto the side surfaces of the impact arms 136 of the spindle 60.

The operation of the hammer drill will now be described.

In order to operate the hammer drill in hammer only mode, the first sleeve 26 is moved into driving engagement with the first gear 20 (downwards in Figure 2) whilst the second sleeve 30 is moved out of driving engagement with the second gear 22 (upwards in Figure 2) by the mode change mechanism. As such, the rotation of the first gear 20 results in rotation of the first shaft 24 whilst the rotation of the second gear 22 is not transferred to the second shaft 28. Therefore rotation of the drive spindle 16 results in rotation of the first shaft 24 only via the first gear 20 and the first sleeve 26.

Rotation of the first shaft 24 results in rotation of the crank plate 44 which in turn results in the rotation of spherical ball 48 and the drive shaft 54 around the axis 140 of the first shaft 24. As the drive shaft 54 can only slide within the tubular passage 56 of the hollow piston 58 which passage 56 extends perpendicularly to the axis 102 of the spindle 60, it will always extend in a direction perpendicular to the axis 102 of the spindle 60 and therefore the whole of the drive shaft 54 moves left and right (as shown in Figure 2) in a reciprocating manner in a direction parallel to the axis 102 of the spindle 60 whilst pivoting about the axis 102 of the spindle 60 at the same time.

As the drive shaft 54 reciprocatingly moves left and right in a direction parallel to the axis of the spindle 60, it reciprocatingly moves the hollow piston 54 within the spindle 60. The reciprocating movement of the hollow piston 58 is transferred to the ram 62 via an air spring 64. The reciprocating ram 62 repetitively strikes the beat piece which in turn repetitively strikes a cutting tool held within the end of the spindle 60 by the tool holder 6.

In order to operate the hammer drill in rotary only mode, the first sleeve 26 is moved out of driving engagement with the first gear 20 (upwards in Figure 2) whilst the second sleeve 30 is moved into driving engagement with the second gear 22 (downwards in Figure 2) by the mode change mechanism. As such, rotation of the second first gear 22 results in rotation of the second shaft 28 whilst the rotation of the first gear 20 is not transferred to the first shaft 24. Therefore, rotation of the drive spindle 16 results in rotation of the second shaft 28 only via the second gear 22 and the second sleeve 30.

Rotation of the first shaft 24 results in rotation of the second bevel gear 90 which in turn results in the rotation of the first bevel gear 84 about the axis of the spindle 60. This in turn results in the three pins 92 moving sideways, perpendicularly to their longitudinal axes, around the axis 102 of the spindle 60. This in turn results in the three circular gears 94 rotating around the axis 102 of the spindle 60.

Under normal operating conditions, the amount of restive torque on the hollow spindle 60 is low and therefore is less than that of the threshold of the torque clutch. As such, the ball bearings 108 of the torque clutch remain held within the indentations 114 in path on the side wall 112 of the cup shaped gear 70 due to spring force of the bevel washers 110. Therefore, the cup shape gear 70 is held rotationally locked to the clutch sleeve 104 which in turn results in the cup shaped gear 70 being rotationally locked to the annular shaped gear 78. As such there is no relative rotation between the cup shaped gear 70 and the annular shaped gear 78. This is referred to the torque clutch "not slipping".

The circular gears 94 are drivingly engaged with both the cup shaped gear 70 and the annular shaped gear 78. Therefore, as the pins 92 rotate around the axis 102 of the spindle 60, the three circular gears 94 also rotate around the axis 102 causing both the cup shaped gear 70 and the annular shaped gear 78, which are rotationally locked to each other, also to rotate around the axis 102 in unison. As the cup shaped gear 70 and the annular shaped gear 78 are rotationally locked to each other and move in unison, the three circular gears 94 do not rotate around the pins 92 upon which they are mounted.

As such, the spindle 60, which is rigidly connected to the cup shape gear 70, also rotates around the axis 102. This in turn rotatingly drives the tool holder 6 which in turn rotatingly drives any cutting tool held the tool holder within the end of the spindle 60. The sleeve 74, which is rigidly connected to annular shape gear 78, also rotates an as the cup shaped gear 70 and the annular shaped gear 78 are rotationally locked to each other. As such, the sleeve 74 will rotate at the same rate and in the same direction as the spindle 60. As there is no relative rotation between the sleeve 74 and spindle 60, there is no movement of the anvil 116 and therefore the tangential impact mechanism will not operate. As such, there is a smooth rotary movement applied to the spindle 60. The driving force is transferred from the first bevel gear 84 to a cutting tool held within the front end of the spindle 60 via the path indicated by solid line 160. The rate of rotation of the spindle 60 versus the drive spindle 6 is determined by the gear ratios between the drive spindle 16 and the second gear 22 and the gear ratio between the second bevel gear 90 and the first bevel gear 84.

However, when the operating conditions cease to be normal and the amount of restive torque on the spindle 60 is excessive, for example during kick back where a cutting tool is prevented from further rotation within a work piece, the restive torque becomes greater than that of the threshold of the torque clutch. When the amount of restive torque on the spindle 60 is excessive, the rotation of the spindle 60 will be severely hindered or even completely stopped. However, the drive spindle 60 of the motor 10 will continue to rotate, rotationally driving the second gear 22, second shaft 28, the second bevel gear 90 and first bevel gear 84 which in turn will continue to rotationally drive the pins 92 and circular gears 94 around the axis 102 of the spindle 60. However, as rotation spindle 60 is hindered or stopped, the rotation of the cup shaped gear 70 is similarly hindered or stopped. Therefore, the torque clutch slips due to the ball bearings 108 of the torque clutch moving out of the indentations 114 in path on the side wall 112 of the cup shaped gear 70 against the spring force of the bevel washers 110 and travelling along the path, allowing the cup shape gear 70 to rotate in relation to the clutch sleeve 104. This in turn allows the annular shaped gear 78 to rotate in relation to the cup shaped gear 70. Therefore the rate of rotation of the cup shaped gear and the annular shaped gear will be different. As the circular gears 94 are meshed with the cup shaped gear 70, each of the three circular gears 94 will be caused to rotate around the pin 92 upon which they are mounted in addition to rotating around the axis 102 of the spindle 60. As the circular gears 94 rotate around the pin, they cause the annular gear 84 to rotate as it is meshed with the circular gears 94. As the cup shaped gear 70 is severely hinder or even completely stopped, there is a relative rotation between the cup shaped gear 70 and annular gear 84 and therefore a relative rotation between the sleeve 74 and spindle 60.

Because the spindle 60 is attached to the cup shaped gear 70, and the sleeve 74 is attached to the annular shape gear 84 and that the rotary drive from the motor is imparted to the planetary gear system via the circular gears 94, the direction of rotation of the sleeve 74 and spindle 60 when the torque clutch is not slipping (ie the cup shaped gear 70 and the annular shaped gear 84 are rotationally locked to each other and there is no relative rotational movement between the two) remains the same as the direction of rotation of the sleeve when the torque clutch slips (ie when there is relative rotation between the cup shaped gear 70 and the annular shaped gear 84).

As the sleeve 74 starts to rotate, the anvil 116, which is connected to the sleeve 74 via the ball bearings 132 and which is in its most forward position because the ball bearings 132 are urged to the apex 28 of the V shaped grooves 126 of the sleeve and rear walls of the U shaped recesses by the spring 118, starts to rotate with the sleeve 74. However, as the anvil rotates, the two protrusions 134 engage with the two impact arms 136 which, as they are attached to the spindle 60, are either stationary or rotating much more slowly than the sleeve 74. The anvil 116 is therefore prevented from rotating further with the sleeve 74. Therefore, as the sleeve 74 continues to rotate, the ball bearings 132 are forced to travel backwards along one of the arms 130 of the V shaped grooves 126 due to the ball bearings 132 and the V shaped grooves 126 acting a cam and cam follower to accommodate the relative rotational movement between the anvil 116 and the sleeve 74. As the ball bearings 132 move backwards and as they are engaged with the rear walls of the U shaped recesses 122, they pull the anvil 116 rearwardly (left in Figure 2) against the biasing force of the spring 118. As the anvil 116 slides rearwardly, the two protrusions 134 slide rearwardly whilst in sliding engagement with the two impact arms 136. Once the anvil has been moved rearwardly sufficiently, the two protrusions 134 disengage with the impact arms 136 and slide to the rear of the two impact arms 136. In this position, the impact arms 136 no longer hinder the rotational movement of the anvil 116. As such the anvil 116 is free to rotate. Therefore, the rotational movement of the sleeve 74 is imposed onto the anvil 116. Furthermore, as the anvil 116 is free to rotate, the spring 118 drives the anvil 116 forward, causing it to rotate on the sleeve 74 at a much faster rate than the sleeve 74 due to the ball bearings 132 travelling along the arms 130 of the V shape grooves 126 which act as cam and cam followers. As the anvil 116 moves forwards and rotates, the two protrusion 134 move between and head towards the two impact arms 136. As it continues to move forward and rotate, the protrusions 134 tangentially strike impact surfaces on the sides of the two impact arms 136. As the protrusions 134 strike the two impact arms 136, they impart a tangential impact to the spindle 60. Once in engagement with the impact arms 136, the anvil 116 is prevented from further rotation relative to the spindle 60. However, the sleeve 74 continues to rotate forcing the ball bearings 132 rearwadly along the arms 130 of the V shaped slots 126 and causing the whole process to be repeated. In this manner, the tangential impact mechanism tangentially strikes the spindle 60, which in turn transfers the tangential impacts to a cutting tool held with the front end of the spindle 60.

The size and speed of the tangential impact is determined by the mass of the anvil 116, the strength of the spring 118 and the shape of V shaped grooves 126.

The tangentially impact driving force is transferred from the first bevel gear 84 to a cutting tool held within the front end of the spindle 60 via the path indicated by solid line 162. The rate of rotation of the sleeve 74 versus the drive spindle 6 is determined by the gear ratios between the drive spindle 16 and the second gear 22, the gear ratio between the second bevel gear 90 and the first bevel gear 84 and the gear ratio of the planetary gear system. This is a different ratio to that of the spindle 60 and the drive spindle 16. This provides the benefit of having the spindle 60 rotate at one optimised rate when the hammer is operating with only a smooth rotation of the hollow spindle 60 and the sleeve 74 rotate at a second optimised rate when tangential impact mechanism is operating. The sizes of the cup shaped gear 70, circular gears 94 and annular shaped gear 78 can be determined so that the gear ratios between the drive spindle 16 and the second gear 22 and between the second bevel gear 90 and the first bevel gear 84 can be optimised for driving the spindle 60 whilst the ratio of the planetary gear system optimises the rate of rotation for the sleeve 74 of the tangential impact mechanism

In order to operate the hammer drill in rotary and hammer mode, the first sleeve 26 is moved into driving engagement with the first gear 20 (downwards in Figure 2) whilst the second sleeve 30 is also moved into driving engagement with the second gear 22 (downwards in Figure 2) by the mode change mechanism. As such, rotation of the second gear 22 results in rotation of the second shaft 28 whilst the rotation of the first gear 20 results in rotation of the first shaft 24. Therefore rotation of the drive spindle 16 results in rotation of both the first and second shafts 28. The hammer mechanism and rotary mechanism then each operate as described above.

The tangential impact mechanism is described above with the use of V shape grooves 126. The use of V shaped grooves 126 allows the tangential impact mechanism to operate when the spindle is rotated in either direction as is well known in the art. If it is desired that the tangential impact mechanism should only operate in one direction of rotation, then only a single spiral groove angled in the appropriate direction is required.

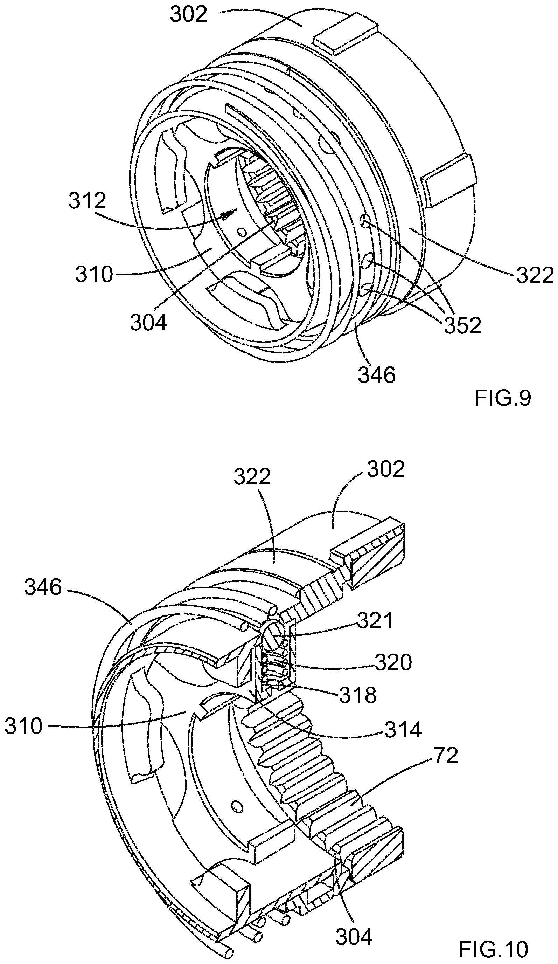

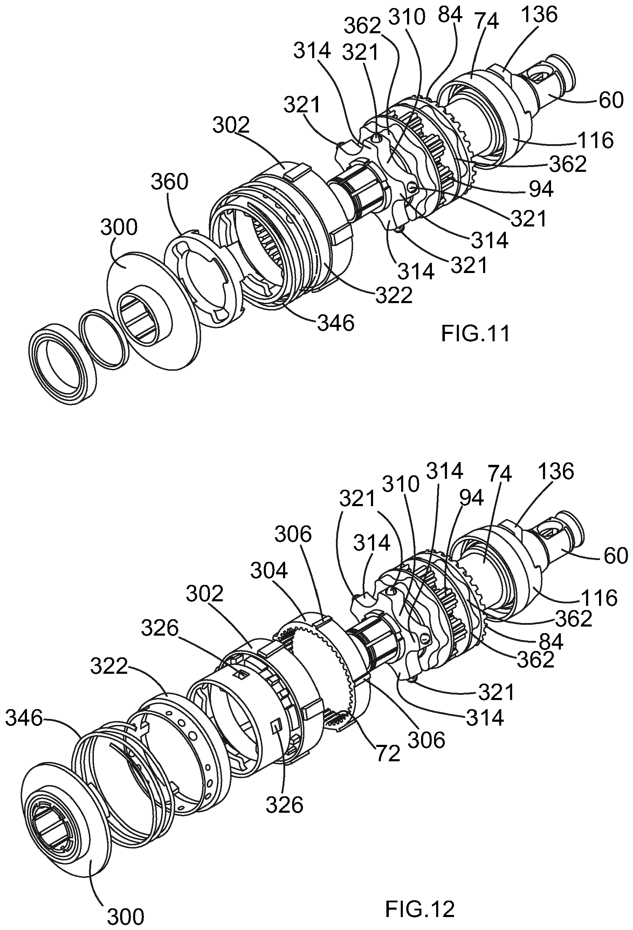

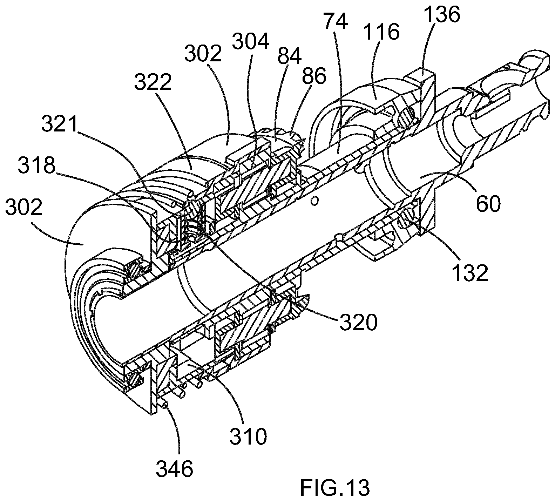

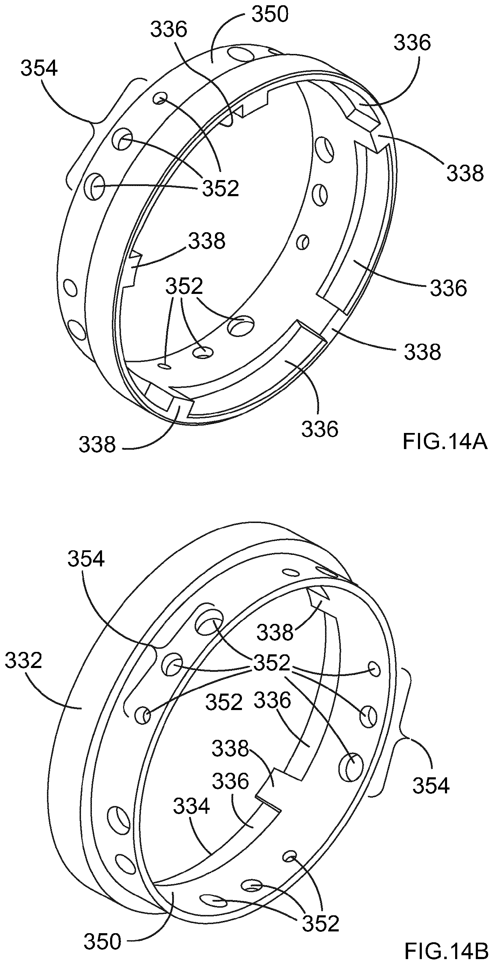

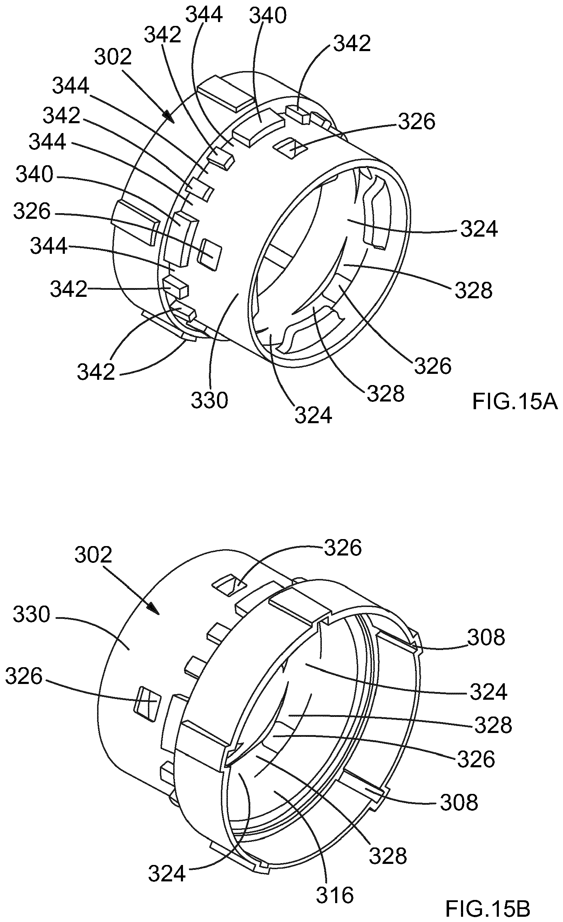

An embodiment of the present invention will now be described with reference to Figures 8 to 16. Where the same features which were present in the example described above with reference to Figures 1 to 7, the same reference numbers are used. The difference between the embodiment and the example is that the design of the torque clutch has been altered in order to enable the torque at which the torque clutch slips to be adjustable. All of the other features of the hammer drill remain the same.

Referring to the drawings, rigidly mounted on the hollow spindle 60 is a radially extending circular connection ring 300. Rotation of the hollow spindle 60 results in rotation of the connection ring 300. Rigidly attached to the connection ring 300, forward of the connection ring 300, is a tubular ring gear support 302 which surrounds the spindle 60 and sleeve 74 whilst leaving an annular space 312 surrounding the spindle 60 and sleeve 74. Rotation of the ring gear support 302 results in rotation of the connection ring 300. Mounted in a rigid manner within the ring gear support 302 is a ring gear 304 of a planetary gear system which has teeth 72. Splines 306 on the ring gear 304 engage with slots 308 in the ring gear support 302 to prevent relative rotation between the two. As such, rotation of the ring gear support 302 results in rotation of the ring gear 304.

Formed on the inner wall 316 on the inside ring gear support 302, adjacent the ring gear 304 in an axial direction is a circumferential path 324 (the ring gear support 302 acting as a "path support" for the path 324). Form equidistantly along the path 324 in a symmetrical manner of four square apertures 326. Ramps 328 are formed along the path on either side of each square aperture 326 which lead into each square aperture 326. The radial distance of the path 324 from the longitudinal axis 102 between the ramps 328 remains constant, whilst the radial distance of the path 324 from the longitudinal axis 102 along the ramps 328 increase as it approaches the square apertures 326.

Mounted on a rear section 330 of the ring gear support 302 is a torque selector ring 332. Inside the torque selector ring 332, at the forward end 334 of the torque selector ring 332, are four recesses 336 separated by four pegs 338. When the torque selector ring 332 is mounted on the ring gear support 302, the recesses 336 sit on and capable of sliding over large and small splines 340, 342 formed on the ring gear support 302. Formed between the large and small splines 340, 342 are gaps 344. Each peg 338 is capable of locating in one of the gaps 344. A large spring 346 is sandwiched between a shoulder 348 formed on the outside of the torque selector ring 332 and the connection ring 300 which biases the torque selector ring 332 forward. When the pegs 338 are aligned with the gaps 344, the large spring 346 urges the pegs 338 into the gaps 344. When the pegs 338 are in the gaps 344, the torque selector ring 332 is prevented from rotating on the ring gear support 302. In order to disengage the pegs 338 from the gaps 344, an operator has to slide the torque selector ring 322 rearwardly on the ring gear support 302 against the biasing force of the large spring 346 to slide the pegs 338 out of the gaps 344. There are three gaps 344 between the large splines 340 corresponding to three angular positions of torque selector ring 332 on the ring gear support 302.

Formed circumferentially through the rear section 350 of the torque selector ring 322, in a symmetrical fashion, are four sets 354 of three holes 352. The three holes 352 in each set 354 have different diameters, starting with a large diameter, a medium diameter and a small diameter. When the pegs 338 are located in one of the gaps 344, one of the holes 352 in each set 354 aligns with a square aperture 326 in the ring gear support 302, all of the holes 352 in alignment being of the same diameter. The hole 353 which aligns with the square aperture 326 will depend on which gaps 344 the pegs 338 are located in. When the pegs 338 are located in the first gap 344 of each set, the large holes 352 will align with the square apertures 326. When the pegs 338 are located in the second gap 344 of each set, the medium holes 352 will align with the square apertures 326. When the pegs 338 are located in the third gap 344 of each set, the small holes 352 will align with the square apertures 326. In order to change the size of the holes 352 aligned with the square apertures 326, an operator has to slide the torque selector ring 322 rearwardly on the ring gear support 302 against the biasing force of the large spring 346 to slide the pegs 338 out of the gaps 344, then rotate it until the pegs 338 align with another gap 344 within each set and release the toque selector ring 322 and allow the pegs 338 to enter the new gaps 344, and aligning a different sized hole 352 with the square apertures 326.

Rigidly mounted on the sleeve 74, inside the ring gear support 302 within the annular space 312 adjacent the ring gear 304 in an axial direction (but separated by a spacer 362), is a bearing mount 310 (which also referred to as a "bearing support mechanism"). The bearing mount 310 has four identical arms 314 which extend radially outwards, in a symmetrical manner with adjacent arms 314 being orientated at 90 degrees relative to each other, toward, but make no contact with, the path 324 formed on the inner wall 316 of the ring gear support 302. Formed in each arm 314 in a symmetrical manner is a tubular passage 318 which extends radially outwards along the length of each of the arms 314, ending with an aperture at the outer end of the arm 314 facing the path 324 formed on the inner wall 316 of the ring gear support 302. Mounted within each tubular passage 318 is a helical spring 320 which extends the length of the passage 318. A ball bearing 321, which has a smaller diameter than the passage 318, is located in each aperture of the passages 318 and abuts against the spring 320, the spring 320 biasing each ball bearing 321 out of its respective aperture. The ball bearing 321 is biased outwardly and against the path 324 formed on the inner wall 316 of the ring gear support 302.

Under normal conditions the sleeve 74 and bearing mount 310 will rotate inside of ring gear support 302 until each of the bearings 321 travels along a ramp 328 and engages with the square apertures 326, with the ball bearings 321 able to extend radially outwardly through the square apertures 326. The amount by which the ball bearings 321 can extend into and through the square apertures 326 will depend on the diameter of the holes 352 in torque selector ring 322 aligned with the square apertures 326. The larger the diameter, the more of the ball bearings 321 can extend into and through the square apertures 326. Once the ball bearings 321 are located in square apertures 326, torque can be transferred from the sleeve 74 via the bearing mount 310, ball bearings 321 and ring gear support 302 to the hollow spindle 60 and therefore they will rotate as a single unit. As such, the torque clutch does not slip. If an excessive torque, which is greater than the torque threshold of the torque clutch, is placed across the torque clutch, the ball bearings 321 will ride up the ramps 328 against the biasing force of the springs 320 allowing the sleeve 70 and bearing mount 310 to rotate relative to the ring gear support 302 and hollow spindle 60. As such, the torque clutch slips. The sleeve 74 and bearing mount 310 will continue to rotate with the ball bearings 321 travelling along the path 324 unit the ball bearings 321 align again with the square apertures 326. If the torque has reduced below the threshold, then the ball bearings 321 will locate in the square apertures 326. If the torque has not dropped below the threshold, the process will repeat itself with the ball bearings 321 travelling along the path 324, repetitively entering and leaving the square apertures 326. A rubber dampener 360 is sandwiched between the bearing mount 310 and the connection ring 300 to absorb vibration generated by the slipping action of the torque clutch.

The torque threshold of the torque clutch is dependent on how far the ball bearings 321 extend into and through the square apertures 326 which in turn is dependent on the size of the holes 352 aligned with the square apertures 326. By altering the size of the holes 352 aligned with the square apertures 326, by rotation of the torque selector ring 322, the torque threshold of the clutch be adjusted. As such, the torque selector ring acts as a "penetration adjustment mechanism", the size of the holes 352 aligned with the apertures 326 determining the amount of penetration of the bearings 321 into the apertures 326.

The hammer drill according to the embodiment operates in the same manner as the example described above with reference to Figures 1 to 7 except that the torque threshold at which the torque clutch slips to start the tangential impact mechanism can be adjusted between three settings. Such adjustment is achieved by the operator rotating the torque selector ring 322 on the ring gear support 302 to align appropriately size holes 352 with the square apertures 326 prior to the use of the hammer drill. Once the torque threshold has been set, the operator uses the hammer drill. When the torque across the torque clutch is below the threshold, the tangential impact mechanism is switched off and the hammer drill acts a traditional hammer. When the torque across the torque clutch is above the threshold which has been set be the operator, the tangential impact mechanism is activated and tangential impacts are imparted onto the hollow spindle 60.

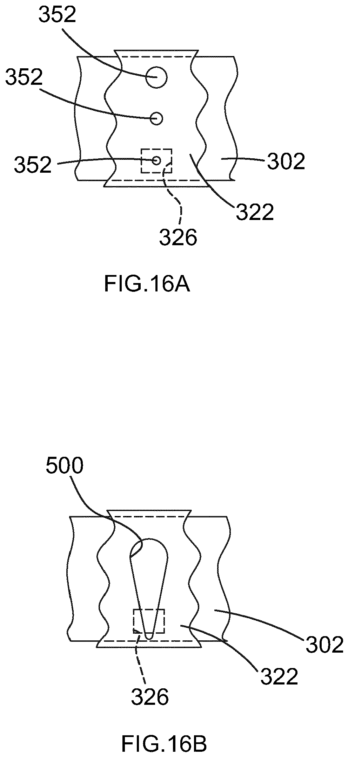

It will be appreciated that the design of torque selector ring 322 with three holes 352 (shown schematically in Figure 16A) can be easily altered with alternative designs whilst enabling it to function in the same manner. For example the number and/or shape of the holes can be altered. Alternatively, as shown in Figure 16B, a single elongate hole 500, having a length greater than the aperture 326 but a width which decreases along its length, can be utilised. The width can extend from dimension which is a similar width of the aperture (or greater) at one end to a width which is substantially less than that of an aperture 326 at the other end. In use, a portion of each of the elongate holes 500 is located over the apertures 326. The size of the portion of the elongate holes 50 aligned with the apertures 326 can be adjusted by rotating the torque selector ring 322 to place a different portion of the same hole 500 having a different size over the aperture 326. As such, the amount that the bearings 321 can enter the apertures 326 can be adjusted by adjusting the size of the portions of the elongate holes 500 aligned with the apertures 326.

## Claims

1. A drill comprising:
a housing (2, 4);
a motor (100) mounted in the housing (2, 4) having a drive spindle (16);
an output spindle (60) capable of being rotationally driven by the drive spindle (16) via a torque clutch which slips when the torque across the torque clutch exceeds a predetermined value, the output spindle (60) having an impact surface (136) and a central axis (102);
a tangential impact mechanism for superimposing tangential impacts onto the output spindle (60) when activated, the tangential impact mechanism comprising;
a sleeve (74) rotatably mounted on the output spindle (60) which is capable of being rotationally driven by the drive spindle (16); and
an anvil (116) rotatably mounted onto the output spindle (60) and which is connected to the sleeve (74) so that relative rotation of the sleeve (74) and spindle (60) results in the anvil (116) repetitively striking the at least one impact surface (136) ;
wherein the output spindle (60) and the sleeve (74) are rotationally driven by the drive spindle (16) via a gear system (70, 78, 94);
wherein the drive spindle (16) drives the sleeve (74) via the gear system at the same rate and direction as the output spindle (60) so that there is no relative rotation between the sleeve (74) and output spindle (60) when the torque clutch is not slipping and at a different rate and/or direction so that there is relative rotation between the sleeve (74) and output spindle (60) when the torque clutch is slipping;
wherein there is a torque threshold adjustment mechanism (302, 310, 322, 321, 352) by which the predetermined value of the torque at which the torque clutch starts to slip can be adjusted; wherein the torque clutch has a first part and a second part, one part being connected to the output spindle (60), the other part being connect to the drive spindle (16), the first part rotating relative to the second part when the torque clutch is slipping, the first part and second part rotating in unison when the torque clutch is not slipping;
**characterised in that** one part comprises a path support (302) comprising:
a circular path (324) formed on a surface (316) of the path support; and
a plurality of apertures (326) formed through the path (324) at predetermined positions along the path (324);
wherein the other part comprises a bearing support mechanism (310) located adjacent to the path support (302) and which is capable of rotating relative to the path support (302), the bearing support mechanism (310) comprising a plurality of bearings (321) moveably mounted on the bearing support mechanism (310) which are biased to extend from and engage with the path (324);
wherein the bearings (321) slide along the path (324) when the bearing support mechanism (310) rotates relative to the path support (302), the bearings (321) aligning with and extending into the apertures (326) when the bearing support mechanism (310) is located at predetermined angular positions relative to the path support (302);
wherein the predetermined value of the torque at which the torque clutch slips is dependent on the amount the bearings (321) extend into the apertures (326); wherein there is further provided a penetration adjustment mechanism (322) located adjacent to the path support (302), the penetration adjustment mechanism (322) co-operating with the path support (302) to adjust the amount by which the bearings (321) can extend into the apertures (326) when the bearings (321) are aligned with the apertures (326).

2. A drill as claimed in claim 1 wherein the penetration adjustment mechanism (322) comprises a plurality of sets (354) of holes (352), the holes (352) in each set (354) being of different sizes relative to the holes (352) in the same set (354), the size and configuration of the holes (352) in each set (354) being the same as in the other sets (354);
wherein the penetration adjustment mechanism (322) is capable of being rotated relative to the path support (302);
wherein correspondingly sized holes (352) in each of the sets (354) are capable of aligning with the apertures (326) when the penetration adjustment mechanism (322) is at predetermined angular positions relative to the path support (302);
wherein the size of the holes (352) aligned with the apertures (326) determines the amount by which the bearings (321) can extend into the apertures (326);
wherein the predetermined value of the torque at which the torque clutch slips is adjusted by rotating the penetration adjustment mechanism (322) relative to the path support (302) in order to align different sized holes (352) with the apertures (326).

3. A drill as claimed in claim 1 wherein the penetration adjustment mechanism (322) comprises a plurality of holes (500), each of the holes (352) having the same dimensions as the other holes (500);
wherein the penetration adjustment mechanism (322) is capable of being rotated relative to the path support (302);
wherein correspondingly sized portion of each of the holes (500) are capable of aligning with the apertures (326) when the penetration adjustment mechanism (322) is at predetermined angular positions relative to the path support (302);
wherein the size of the portion of the holes (500) aligned with the apertures (326) determines the amount by which the bearings (321) can extend into the apertures (326);
wherein the predetermined value of the torque at which the torque clutch slips is adjusted by rotating the penetration adjustment mechanism (322) relative to the path support (302) in order to align different sized portions of the holes (500) with the apertures (326).

4. A drill as claimed in any one of the previous claims wherein the path (324) further comprises ramps (328) which lead into and/or out of the apertures (326).

5. A drill according to any one of claims 2 to 4 wherein the path support (302)comprises a tubular sleeve and capable of being rotated about its longitudinal axis (102), the path (324) being formed on an inner wall (316) of the path support (302);
wherein the penetration adjustment mechanism (322) comprises a second sleeve which is co-axial with and surrounds the path support (302), the penetration adjustment mechanism (322) capable of being rotated about its longitudinal axis (102) relative to the path support (302); and
wherein the bearing support mechanism (310) is located inside of the path support 302), the bearings (321) extending radially outwardly from the longitudinal axis (102) towards and into engagement with the path (324).

6. A drill in accordance with any of claims 2 to 5 wherein the gear system comprises a plurality of gears (304, 78, 94);
wherein there is a first gear (304) is mounted on the output spindle (60) so that rotation of the first gear (304) results in rotation of the spindle (60);
wherein there is a second gear (78) is mounted on the sleeve (74) so that rotation of the second gear (78) results in rotation of the sleeve (74);
wherein the drive spindle (16) is drivingly connected to a third gear (94) which is meshed with the first and second gears and which is capable of rotationally driving both of the gears wherein one part of the torque clutch is connected to the first gear (304) and the other part of the torque clutch is connected to the second gear (78).

7. A drill in accordance with any of the previous claims wherein the torque clutch has a first part and a second part, one part being connected to the output spindle (60), the other part being connect to the drive spindle (16), wherein the output spindle (60) and the sleeve (74) are rotationally driven by a planetary gear system comprising a ring gear (70), a sun gear (78) and at least one planetary gear (94) mounted on a carrier (84) and which is drivingly connected between the ring gear (70) and sun gear (78);
wherein the ring gear (70) is mounted on the output spindle (60) so that rotation of the ring gear (70) results in rotation of the spindle (60);
wherein the sun gear (78) is mounted on the sleeve (74) so that rotation of the sun gear (78) results in rotation of the sleeve (74);
wherein the drive spindle (16) is drivingly connected to the carrier (84) such that rotation of the drive spindle (16) results in the rotation of the at least one planetary (94) gear around the central axis (102) of the output spindle (60);
wherein one part of the torque clutch is connect to the ring gear (70) and the other part of the torque clutch is connected to the sun gear (78)..

8. A drill according claim 7 wherein the drive spindle (16) is capable of rotationally driving the whole of the planetary gear system in unison with no relative movement of the component parts of the planetary gear system when the torque clutch is not slipping.

9. A drill in accordance with any of the previous claims wherein the output spindle (60) is a hollow output spindle (60) and wherein there is further provide a hammer mechanism for generating axial impacts which can be imposed on a cutting tool, the hammer mechanism comprising:
a piston (58) capable of being reciprocatingly driven by the drive spindle (16) via a transmission mechanism (44, 54, 56);
a ram (62) reciprocatingly driven by the reciprocating piston (58) via an air spring (64); and
a beat piece (66) repetitively struck the reciprocating ram (62);
the piston, ram and beat piece being slideably mounted within the hollow output spindle (60).

## Patentansprüche

1. Bohrmaschine, umfassend:
ein Gehäuse (2, 4);
einen Motor (100), der in dem Gehäuse (2, 4) montiert ist und eine Antriebsspindel (16) aufweist;
eine Ausgangsspindel (60), die in der Lage ist, von der Antriebsspindel (16) über eine Drehmomentkupplung drehbar angetrieben zu werden, die schlupft, wenn das Drehmoment über die Drehmomentkupplung einen vorbestimmten Wert überschreitet, wobei die Ausgangsspindel (60) eine Aufprallfläche (136) und eine Mittelachse (102) aufweist;
einen tangentialen Aufprallmechanismus zum Überlagern tangentialer Stöße auf die Ausgangsspindel (60), falls diese aktiviert ist, wobei der tangentiale Aufprallmechanismus umfasst;
eine Hülse (74), die drehbar an der Ausgangsspindel (60) montiert ist und in der Lage ist, von der Antriebsspindel (16) drehbar angetrieben zu werden; und
einen Amboss (116), der drehbar an der Ausgangsspindel (60) montiert ist und mit der Hülse (74) verbunden ist, so dass eine relative Drehung der Hülse (74) und der Spindel (60) dazu führt, dass der Amboss (116) wiederholt gegen die mindestens eine Aufprallfläche (136) schlägt;
wobei die Ausgangsspindel (60) und die Hülse (74) von der Antriebsspindel (16) über ein Getriebesystem (70, 78, 94) drehbar angetrieben werden;
wobei die Antriebsspindel (16) die Hülse (74) über das Getriebesystem mit der gleichen Geschwindigkeit und Richtung wie die Ausgangsspindel (60) antreibt, so dass keine relative Drehung zwischen der Hülse (74) und der Ausgangsspindel (60) auftritt, wenn die Drehmomentkupplung nicht schlupft, und mit einer anderen Geschwindigkeit und/oder Richtung, so dass eine relative Drehung zwischen der Hülse (74) und der Ausgangsspindel (60) auftritt, wenn die Drehmomentkupplung schlupft;
wobei ein Drehmoment-Schwelleneinstellmechanismus (302, 310, 322, 321, 352) vorhanden ist, durch den der vorbestimmte Wert des Drehmoments, bei dem die Drehmomentkupplung zu schlupfen beginnt, eingestellt werden kann; wobei die Drehmomentkupplung einen ersten Teil und einen zweiten Teil aufweist, wobei ein Teil mit der Ausgangsspindel (60) verbunden ist, wobei der andere Teil mit der Antriebsspindel (16) verbunden ist, wobei sich der erste Teil relativ zum zweiten Teil dreht, wenn die Drehmomentkupplung schlupft, wobei sich der erste Teil und der zweite Teil gemeinsam drehen, wenn die Drehmomentkupplung nicht schlupft;
**dadurch gekennzeichnet, dass** ein Teil einen Bahnträger (302) umfasst, umfassend:
eine kreisförmige Bahn (324), die auf einer Oberfläche (316) des Bahnträgers gebildet ist; und
eine Vielzahl von Öffnungen (326), die über die Bahn (324) an vorbestimmten Positionen entlang der Bahn (324) gebildet ist;
wobei der andere Teil einen Lagerträgermechanismus (310) umfasst, der benachbart des Bahnträgers (302) angeordnet ist und der in der Lage ist, sich relativ zu dem Bahnträger (302) zu drehen, wobei der Lagerträgermechanismus (310) eine Vielzahl von Lagern (321) umfasst, die beweglich an dem Lagerträgermechanismus (310) montiert ist, der vorgespannt ist, um sich von der Bahn (324) zu erstrecken und mit dieser in Eingriff gebracht zu werden;
wobei die Lager (321) entlang der Bahn (324) gleiten, wenn der Lagerträgermechanismus (310) relativ zu dem Bahnträger (302) dreht, wobei die Lager (321) mit den Öffnungen (326) ausgerichtet sind und sich dort hinein erstrecken, wenn sich der Lagerträgermechanismus (310) an vorbestimmten Winkelpositionen relativ zu dem Bahnträger (302) befindet;
wobei der vorbestimmte Wert des Drehmoments, bei dem die Drehmomentkupplung schlupft, von dem Betrag abhängig ist, mit dem sich die Lager (321) in die Öffnungen (326) erstrecken;
wobei weiter ein Durchdringungseinstellmechanismus (322) bereitgestellt ist, der sich benachbart des Bahnträgers (302) befindet, wobei der Durchdringungseinstellmechanismus (322) mit dem Bahnträger (302) zusammenarbeitet, um den Betrag einzustellen, mit dem sich die Lager in die Öffnungen (326) erstrecken können, wenn die Lager (321) mit den Öffnungen (326) ausgerichtet sind.

2. Bohrmaschine nach Anspruch 1, wobei der Durchdringungseinstellmechanismus (322) eine Vielzahl von Sätzen (354) von Löchern (352) umfasst, wobei die Löcher (352) in jedem Satz (354) relativ zu den Löchern (352) in dem gleichen Satz (354) unterschiedliche Größen aufweisen, wobei die Größe und Konfiguration der Löcher (352) in jedem Satz (354) die gleiche wie in den anderen Sätzen (354) ist;
wobei der Durchdringungseinstellmechanismus (322) in der Lage ist, relativ zu dem Bahnträger (302) gedreht zu werden;
wobei entsprechend bemessene Löcher (352) in jedem der Sätze (354) in der Lage sind, sich mit den Öffnungen (326) auszurichten, wenn sich der Durchdringungseinstellmechanismus (322) in vorbestimmten Winkelpositionen relativ zu dem Bahnträger (302) befindet;
wobei die Größe der Löcher (352), die mit den Öffnungen (326) ausgerichtet sind, den Betrag bestimmt, mit dem sich die Lager (321) in die Öffnungen (326) erstrecken können;
wobei der vorbestimmte Wert des Drehmoments, bei dem die Drehmomentkupplung schlupft, durch Drehen des Durchdringungseinstellmechanismus (322) relativ zu dem Bahnträger (302) eingestellt wird, um unterschiedlich bemessene Löcher (352) mit den Öffnungen (326) auszurichten.

3. Bohrmaschine nach Anspruch 1, wobei der Durchdringungseinstellmechanismus (322) eine Vielzahl von Löchern (500) umfasst, wobei jedes der Löcher (352) die gleichen Abmessungen wie die anderen Löcher (500) aufweist;
wobei der Durchdringungseinstellmechanismus (322) in der Lage ist, relativ zu dem Bahnträger (302) gedreht zu werden;
wobei sich ein entsprechend bemessener Abschnitt von jedem der Löcher (500) mit den Öffnungen (326) ausrichten kann, wenn sich der Durchdringungseinstellmechanismus (322) in vorbestimmten Winkelpositionen relativ zu dem Bahnträger (302) befindet;
wobei die Größe des Abschnitts der Löcher (500), die mit den Öffnungen (326) ausgerichtet sind, den Betrag bestimmt, um den sich die Lager (321) in die Öffnungen (326) erstrecken können;
wobei der vorbestimmte Wert des Drehmoments, bei dem die Drehmomentkupplung schlupft, durch Drehen des Durchdringungseinstellmechanismus (322) relativ zu dem Bahnträger (302) eingestellt wird, um unterschiedlich bemessene Abschnitte der Löcher (500) mit den Öffnungen (326) auszurichten.

4. Bohrmaschine nach einem der vorstehenden Ansprüche, wobei die Bahn (324) weiter Rampen (328) umfasst, die in die Öffnungen (326) hinein- und/oder aus diesen herausführen.

5. Bohrmaschine nach einem der Ansprüche 2 bis 4, wobei der Bahnträger (302) eine röhrenförmige Hülse umfasst, die in der Lage ist, um ihre Längsachse (102) gedreht zu werden, wobei die Bahn (324) an einer Innenwand (316) des Bahnträgers (302) gebildet ist;
wobei der Durchdringungseinstellmechanismus (322) eine zweite Hülse umfasst, die koaxial zum Bahnträger (302) verläuft und diesen umgibt, wobei der Durchdringungseinstellmechanismus (322) in der Lage ist, um seine Längsachse (102) relativ zu dem Bahnträger (302) gedreht zu werden; und
wobei sich der Lagerträgermechanismus (310) innerhalb des Bahnträgers (302) befindet, sich die Lager (321) von der Längsachse (102) radial nach außen in Richtung der Bahn (324) und in Eingriff damit erstrecken.

6. Bohrmaschine nach einem der Ansprüche 2 bis 5, wobei das Getriebesystem eine Vielzahl von Zahnrädern (304, 78, 94) umfasst;
wobei ein erstes Zahnrad (304) an der Ausgangsspindel (60) montiert ist, so dass eine Drehung des ersten Zahnrads (304) in einer Drehung der Spindel (60) resultiert;
wobei ein zweites Zahnrad (78) an der Hülse (74) montiert vorhanden ist, so dass eine Drehung des zweiten Zahnrads (78) in einer Drehung der Hülse (74) resultiert;
wobei die Antriebsspindel (16) antriebsmäßig mit einem dritten Zahnrad (94) verbunden ist, das mit dem ersten und dem zweiten Zahnrad in Eingriff steht und in der Lage ist, beide Zahnräder drehbar anzutreiben, wobei ein Teil der Drehmomentkupplung mit dem ersten Zahnrad (304) verbunden ist und der andere Teil der Drehmomentkupplung mit dem zweiten Zahnrad (78) verbunden ist.

7. Bohrmaschine nach einem der vorstehenden Ansprüche, wobei die Drehmomentkupplung einen ersten Teil und einen zweiten Teil aufweist, wobei ein Teil mit der Ausgangsspindel (60) verbunden ist, wobei der andere Teil mit der Antriebsspindel (16) verbunden ist, wobei die Ausgangsspindel (60) und die Hülse (74) durch ein Planetengetriebesystem drehbar angetrieben werden, das ein Hohlrad (70), ein Sonnenrad (78) und mindestens ein Planetenrad (94) umfasst, das an einem Träger (84) montiert ist und das zwischen dem Hohlrad (70) und dem Sonnenrad (78) antriebsmäßig verbunden ist;
wobei das Hohlrad (70) an der Ausgangsspindel (60) montiert ist, so dass eine Drehung des Hohlrads (70) in einer Drehung der Spindel (60) resultiert;
wobei das Sonnenrad (78) an der Hülse (74) montiert ist, so dass eine Drehung des Sonnenrads (78) in einer Drehung der Hülse (74) resultiert;
wobei die Antriebsspindel (16) antriebsmäßig mit dem Träger (84) verbunden ist, so dass die Drehung der Antriebsspindel (16) in der Drehung des mindestens einen Planetenrads (94) um die zentrale Achse (102) der Ausgangsspindel (60) resultiert;
wobei ein Teil der Drehmomentkupplung mit dem Hohlrad (70) verbunden ist und der andere Teil der Drehmomentkupplung mit dem Sonnenrad (78) verbunden ist.

8. Bohrmaschine nach Anspruch 7, wobei die Antriebsspindel (16) in der Lage ist, das gesamte Planetengetriebesystem gemeinsam ohne relative Bewegung der Komponententeile des Planetengetriebesystems drehbar anzutreiben, wenn die Drehmomentkupplung nicht schlupft.

9. Bohrmaschine nach einem der vorstehenden Ansprüche, wobei die Ausgangsspindel (60) eine hohle Ausgangsspindel (60) ist und wobei weiter ein Hammermechanismus zum Erzeugen von axialen Stößen bereitgestellt wird, die auf ein Schneidwerkzeug ausgeübt werden können, wobei der Hammermechanismus umfasst:
einen Kolben (58), der in der Lage ist, von der Ausgangsspindel (16) über einen Getriebemechanismus (44, 54, 56) hin- und hergehend angetrieben zu werden;
einen Stempel (62), der von dem hin- und hergehenden Kolben (58) über eine Luftfeder (64) hin- und hergehend angetrieben wird; und
ein Schlagstück (66), das wiederholt den hin- und hergehenden Stempel (62) schlägt;
wobei der Kolben, der Stempel und das Schlagstück gleitend in der hohlen Ausgangsspindel (60) montiert sind.

## Revendications

1. Perceuse comprenant :
un boîtier (2, 4) ;
un moteur (100) monté dans le boîtier (2, 4) et ayant une broche d'entraînement (16) ;
une broche de sortie (60) qui est à même d'être entraînée en rotation par la broche d'entraînement (16) via un embrayage de couple qui patine lorsque le couple en travers de l'embrayage de couple dépasse une valeur prédéterminée, la broche de sortie (60) ayant une surface d'impact (136) et un axe central (102) ;
un mécanisme d'impact tangentiel pour superposer des impacts tangentiels sur la broche de sortie (60) lorsqu'il est activé, le mécanisme d'impact tangentiel comprenant ;
une douille (74) montée à rotation sur la broche de sortie (60) et qui est à même d'être entraînée en rotation par la broche d'entraînement (16) ; et
une enclume (116) montée à rotation sur la broche de sortie (60) et qui est raccordée à la douille (74) de sorte qu'une rotation relative de la douille (74) et de la broche (60) entraîne une frappe répétitive de l'enclume (116) sur la au moins une surface d'impact (136);
dans laquelle la broche de sortie (60) et la douille (74) sont entraînées en rotation par la broche d'entraînement (16) via un système d'engrenage (70, 78, 94) ;
dans laquelle la broche d'entraînement (16) entraîne la douille (74) via le système d'engrenage à la même vitesse et dans la même direction que la broche de sortie (60) de sorte qu'il n'y ait pas de rotation relative entre la douille (74) et la broche de sortie (60) lorsque l'embrayage de couple ne patine pas et à une vitesse et/ou une direction différente de sorte qu'il y ait une rotation relative entre la douille (74) et la broche de sortie (60) lorsque l'embrayage de couple patine ;
dans laquelle il y a un mécanisme d'ajustement de seuil de couple (302, 310, 322, 321, 352) par lequel la valeur prédéterminée du couple à laquelle l'embrayage de couple commence à patiner peut être ajustée ; dans laquelle l'embrayage de couple a une première partie et une seconde partie, une partie étant raccordée à la broche de sortie (60), l'autre partie étant raccordée à la broche d'entraînement (16), la première partie tournant par rapport à la seconde partie lorsque l'embrayage de couple patine, la première partie et la seconde partie tournant à l'unisson lorsque l'embrayage de couple ne patine pas ;
**caractérisée en ce qu'**une partie comprend un support de trajet (302) comprenant :
un trajet circulaire (324) formé sur une surface (316) du support de trajet ; et
une pluralité d'ouvertures (326) formées à travers le trajet (324) dans des positions prédéterminées le long du trajet (324) ;
dans laquelle l'autre partie comprend un mécanisme de support de paliers (310) situé adjacent au support de trajet (302) et qui est à même de tourner par rapport au support de trajet (302), le mécanisme de support de paliers (310) comprenant une pluralité de paliers (321) montés mobiles sur le mécanisme de support de paliers (310), qui sont sollicités pour s'étendre depuis le trajet (324) et s'engager sur celui-ci ;
dans laquelle les paliers (321) coulissent le long du trajet (324) lorsque le mécanisme de support de paliers (310) tourne par rapport au support de trajet (302), les paliers (321) s'alignant sur les ouvertures (306) et s'étendant dans celles-ci lorsque le mécanisme de support de paliers (310) est situé dans des positions angulaires prédéterminées par rapport au support de trajet (302) ;
dans laquelle la valeur prédéterminée du couple auquel l'embrayage de couple patine dépend du degré d'extension des paliers (321) dans les ouvertures (326) ;
dans laquelle il est en outre prévu un mécanisme d'ajustement de pénétration (322) situé adjacent au support de trajet (302), le mécanisme d'ajustement de pénétration (322) coopérant avec le support de trajet (302) pour ajuster le degré d'extension éventuel des paliers (321) dans les ouvertures (326) lorsque les paliers (321) sont alignés sur les ouvertures (326).

2. Perceuse selon la revendication 1, dans laquelle le mécanisme d'ajustement de pénétration (322) comprend une pluralité d'ensembles (354) de trous (352), les trous (352) de chaque ensemble (354) étant de différentes tailles par rapport aux trous (352) du même ensemble (354), la taille et la configuration des trous (352) de chaque ensemble (354) étant les mêmes que dans les autres ensembles (354) ;
dans laquelle le mécanisme d'ajustement de pénétration (322) est à même de tourner par rapport au support de trajet (302) ;
dans laquelle les trous de calibres correspondants (352) de chacun des ensembles (354) sont à même de s'aligner sur les ouvertures (326) lorsque le mécanisme d'ajustement de pénétration (322) se situe dans des positions angulaires prédéterminées par rapport au support de trajet (302) ;
dans laquelle le calibre des trous (352) alignés sur les ouvertures (326) détermine le degré d'extension éventuel des paliers (321) dans les ouvertures (326) ;
dans laquelle la valeur prédéterminée du couple à laquelle l'embrayage de couple patine est ajustée en faisant tourner le mécanisme d'ajustement de pénétration (322) par rapport au support de trajet (302) afin d'aligner des trous de différents calibres (352) sur les ouvertures (326).

3. Perceuse selon la revendication 1, dans laquelle le mécanisme d'ajustement de pénétration (322) comprend une pluralité de trous (500), chacun des trous (352) ayant les mêmes dimensions que les autres trous (500) ;
dans laquelle le mécanisme d'ajustement de pénétration (322) est à même de tourner par rapport au support de trajet (302) ;
dans laquelle les parties de calibres correspondants de chacun des trous (500) sont à même de s'aligner sur les ouvertures (326) lorsque le mécanisme d'ajustement de pénétration (322) se situe dans des positions angulaires prédéterminées par rapport au support de trajet (302) ;
dans laquelle le calibre de la partie des trous (500) alignés sur les ouvertures (326) détermine le degré d'extension éventuel des paliers (321) dans les ouvertures (326) ;
dans laquelle la valeur prédéterminée du couple à laquelle l'embrayage de couple patine est ajustée en faisant tourner le mécanisme d'ajustement de pénétration (322) par rapport au support de trajet (302) afin d'aligner des parties de différents calibres des trous (500) sur les ouvertures (326).

4. Perceuse selon l'une quelconque des revendications précédentes, dans laquelle le trajet (324) comprend en outre des rampes (328) qui mènent dans les ouvertures (326) et/ou hors de celles-ci.

5. Perceuse selon l'une quelconque des revendications 2 à 4, dans laquelle le support de trajet (302) comprend une douille tubulaire et est à même de tourner autour de son axe longitudinal (102), le trajet (324) étant formé sur une paroi interne (316) du support de trajet (302) ;
dans laquelle le mécanisme d'ajustement de pénétration (322) comprend une seconde douille qui est coaxiale avec le support de trajet (302) et entoure celui-ci, le mécanisme d'ajustement de pénétration (322) étant à même de tourner autour de son axe longitudinal (102) par rapport au support de trajet (302) ; et
dans laquelle le mécanisme de support de palier (310) est situé à l'intérieur du support de trajet (302), les paliers (321) s'étendant radialement vers l'extérieur de l'axe longitudinal (102) vers le trajet (324) et en prise avec celui-ci.

6. Perceuse selon l'une quelconque des revendications 2 à 5, dans laquelle le système d'engrenage comprend une pluralité de roues dentées (304, 78, 94) ;
dans laquelle il y a une première roue dentée (304) qui est montée sur la broche de sortie (60) afin que la rotation de la première roue dentée (304) entraîne la rotation de la broche (60) ;
dans laquelle il y a une deuxième roue dentée (78) qui est montée sur la douille (74) de sorte que la rotation de la deuxième roue dentée (78) entraîne la rotation de la douille (74) ;
dans laquelle la broche d'entraînement (16) est raccordée en mode d'entraînement à une troisième roue dentée (94) qui est en prise avec la première et la deuxième roue dentée et qui est à même d'entraîner en rotation les deux roues dentées, dans laquelle une partie de l'embrayage de couple est raccordée à la première roue dentée (304) et l'autre partie de l'embrayage de couple est raccordée à la deuxième roue dentée (78).

7. Perceuse selon l'une quelconque des revendications précédentes, dans laquelle l'embrayage de couple a une première partie et une seconde partie, une partie étant raccordée à la broche de sortie (60), l'autre partie étant raccordée à la broche d'entraînement (16), dans laquelle la broche de sortie (60) et la douille (74) sont entraînées en rotation par un système d'engrenage planétaire comprenant une couronne dentée (70), une roue solaire (78) et au moins une roue dentée planétaire (94) montée sur une roue intermédiaire (84) et qui est raccordée en mode d'entraînement entre la couronne dentée (70) et la roue solaire (78) ;
dans laquelle la couronne dentée (70) est montée sur la broche de sortie (60) de sorte que la rotation de la couronne dentée (70) entraîne la rotation de la broche (60) ;
dans laquelle la roue solaire (78) est montée sur la douille (74) de sorte que la rotation de la roue solaire (78) entraîne la rotation de la douille (74) ;
dans laquelle la broche d'entraînement (16) est raccordée en mode d'entraînement à la roue intermédiaire (84) de sorte que la rotation de la broche d'entraînement (16) entraîne la rotation de la au moins une roue dentée planétaire (94) autour de l'axe central (102) de la broche de sortie (60) ;
dans laquelle une partie de l'embrayage de couple est raccordée à la couronne dentée (70) et l'autre partie de l'embrayage de couple est raccordée à la roue solaire (78).

8. Perceuse selon la revendication 7, dans laquelle la broche d'entraînement (16) est à même d'entraîner en rotation la totalité du système d'engrenage planétaire à l'unisson sans mouvement relatif des parties constituantes du système d'engrenage planétaire lorsque l'embrayage de couple ne patine pas.

9. Perceuse selon l'une quelconque des revendications précédentes, dans laquelle la broche de sortie (60) est une broche de sortie creuse (60) et dans laquelle il est en outre prévu un mécanisme de marteau pour générer des impacts axiaux qui peuvent être imposés sur un outil de coupe, le mécanisme de marteau comprenant :
un piston (58) qui est à même d'être entraîné en va-et-vient par la broche d'entraînement (16) via un mécanisme de transmission (44, 54, 56) ;
un plongeur (62) entraîné en va-et-vient par le piston alternatif (58) via un ressort pneumatique (64) ; et
une pièce de battement (66) frappée de manière répétitive par le plongeur alternatif (62) ;
le piston, le plongeur et la pièce de battement étant montés à coulissement dans la broche de sortie creuse (60).
